(19) Europäisches Patentamt / European Patent Office / Office européen des brevets

(11) **EP 2 602 731 A1**

(12) **EUROPEAN PATENT APPLICATION**

(43) Date of publication:
**12.06.2013 Bulletin 2013/24**

(51) Int Cl.:
***G06F 17/50*** *(2006.01)*

(21) Application number: **12194785.7**

(22) Date of filing: **29.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.12.2011 JP 2011267386**

(71) Applicant: **FUJITSU LIMITED**
**Kawasaki-shi,**
**Kanagawa 211-8588 (JP)**

(72) Inventors:
• **Kazama, Masaki**
**Kawasaki-shi, Kanagawa 211-8588 (JP)**
• **Omata, Seiro**
**Kanazawa-shi, Ishikawa 920-1192 (JP)**
• **Ohara, Katsuyoshi**
**Kanazawa-shi, Ishikawa 920-1192 (JP)**

(74) Representative: **Lewin, David Nicholas**
**Haseltine Lake LLP**
**Lincoln House, 5th Floor**
**300 High Holborn**
**London WC1V 7JH (GB)**

(54) **Program, method and apparatus for simulating free surface flow**

(57)    A computer is caused to calculate an interface of a fluid model that expresses the fluid as a collection of particles based on input boundary condition and initial condition, to calculate surface energy of the calculated interface, to calculate a surface tension of the interface based on the calculated surface energy, and to output a state of the fluid for each specified time interval based on the calculated surface tension, so that simulation results are prevented from exhibiting non-physical behaviors.

FIG. 18

# EP 2 602 731 A1

**Description**

FIELD

The embodiments discussed herein are related to a simulation program, a simulation method, and a simulation apparatus.

BACKGROUND

With recent improvements in calculation machine powers, also simulation techniques have been gradually developed. As a result, simulations have been used for diverse application fields.

As numerical calculation techniques for solving a problem of a continuum body such as a fluid, an elastic body or the like, a finite difference method, a finite element method, a finite volume method, and the like, which obtain an approximate solution of a differential equation based on grids, have been used in many cases. In recent years, since numerical calculations have been utilized in application fields such as CAE (Computer Aided Engineering) and the like, these numeral calculation techniques have been developed to solve a problem where a fluid and a structure interact with each other.

However, with the techniques, such as a finite element method, a finite volume method and the like, using grids, handling a problem where an interface such as a free surface or the like is present or a structure-fluid coupled problem where a moving boundary occurs is complicated. Therefore, it is difficult to create a program in most cases.

In the meantime, particle methods such as an MPS (Moving Particle Semi-implicit) method, an SPH (Smoothed Particle Hydrodynamics) method and the like, which do not use grids, do not need special procedures to handle a moving boundary. Therefore, particle methods have been widely used in recent years.

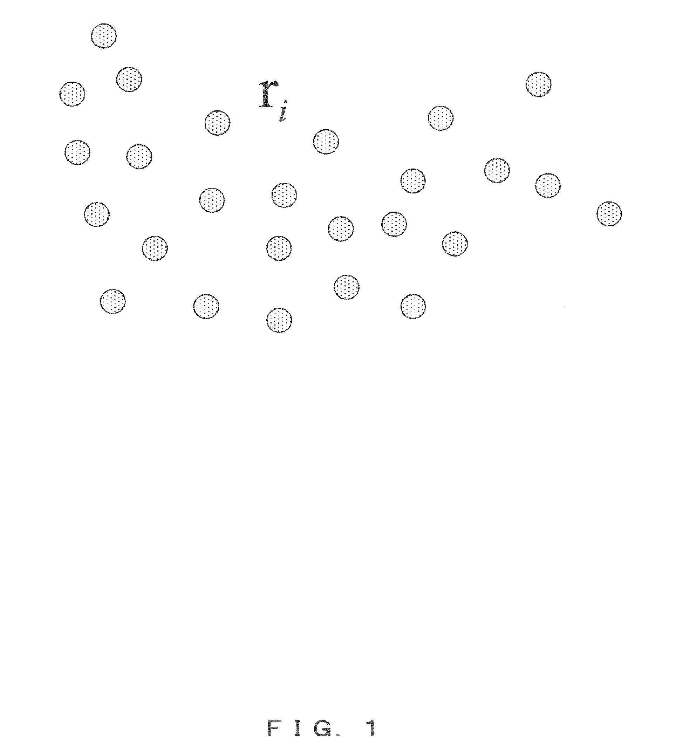

The particle methods were developed to enable a transforming and moving boundary such as a free surface or the like to be easily handled. However, if a continuum body turns into a simple particle swarm as a result of executing a discretization method, a position of a boundary surface of the continuum body becomes ambiguous as illustrated in FIG. 1. Accordingly, for the particle methods, a unified technique of solving a problem that needs to explicitly handle a boundary of a surface tension or the like was not developed, and there are only some techniques uniquely and individually developed under the present circumstances (for example, see Patent Document 1, Non-Patent Document 1, Non-Patent document 2, and Non-Patent document 3).

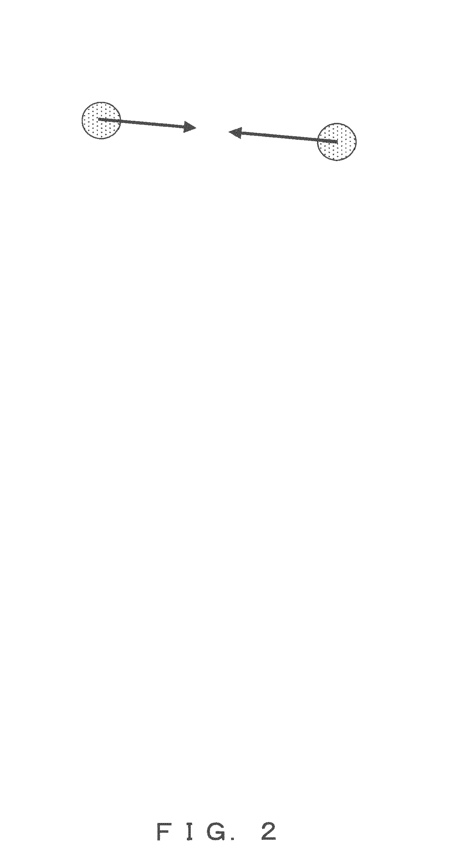

By way of example, Patent Document 1 discloses a technique of forming a potential based on a distance between particles, and of applying an attractive force between the particles as illustrated in FIG. 2. This is a technique developed based on a description picture such that a surface tension is caused by non-uniformity of an intermolecular force on a surface.

Additionally, techniques disclosed by Non-Patent Document 1, Non-Patent Document 2 and Non-Patent Document 3 are those of applying a surface tension to particles at a boundary by recognizing neighboring particles the number of which has been reduced as those present at the boundary.

Furthermore, Non-Patent Document 2 and Non-Patent Document 3 introduce also a model that expresses wettability.

Patent Document 1: Japanese Laid-Open Patent Publication No. 2008-111675

Non-Patent Document 1: T. Hongo, M. Shigeta, S. Izawa, and Y. Fukunishi, "Modeling of Surface Tension Acting on Gas-Liquid Interface in Three-Dimensional Incompressible SPH Computation", 23rd Symposium of Computational Fluid Dynamics, A8-5 (2009)

Non-Patent Document 2: M. Agawa, M. Shigeta, S. Izawa, and Y. Fukunishi, "Incompressible SPH Simulation of a Liquid Flowing down an Inclined Plane", 23rd Symposium of Computational Fluid Dynamics, A9-4 (2009)

Non-Patent Document 3: K. Nomura, S. Koshizuka, Y. Oka and H. Obata, "Numerical analysis of Droplet Breakup Behavior using Particle Method", Journal of Nuclear Science and Technology, Vol. 38, No. 12, pp. 1057-1064 (2001)

However, the above described conventional techniques have the following problem.

Namely, a model for expressing an effect of a surface tension that influences only a surface is included to affect also particles present other than the surface, leading to an occurrence of non-physical behaviors. Especially, it becomes difficult to control a dynamic motion at a wetting angle.

For example, with a surface tension calculation implemented by the techniques disclosed by Patent Document 1, Non-Patent Document 1, Non-Patent Document 2 and Non-Patent Document 3, a surface tension influences not only a surface but internal particles.

Especially, with the technique of Patent Document 1, an attractive force is applied to all particles. Therefore, a force generated by a surface tension is applied also to internal particles.

Additionally, the techniques of Non-Patent Document 1,

Non-Patent Document 2, and Non-Patent Document 3 are methods for estimating particles present on a surface based on information of neighboring particles and for introducing a surface tension. However, also particles within a fluid are determined to be those on a surface in the calculation, so that the surface tension is applied. Accordingly, a contact surface cannot be recognized, making it difficult to handle a case of a motion with a wetting angle.

Assume that a particle distribution is

$\mathbf{r}_i = (x_i, y_i)$

(where i represents a particle number). With the techniques of Non-Patent Document 1 and Non-Patent Document 2, the calculation of a surface tension is performed with the following procedures 1 to 3 after determining the particle i to be a particle of a surface.

(Procedure 1)

The following amount is calculated.

$$\mathbf{r}_g\big|_i = \frac{\sum_j \mathbf{r}_j W(|\mathbf{r}_i - \mathbf{r}_j|, h)}{\sum_j W(|\mathbf{r}_i - \mathbf{r}_j|, h)}$$

(formula 1)

where
$W$
on the right side is a Kernel Function (also called a weighting function), and Non-Patent Document 1 and Non-Patent Document 2 employ the following spline function.

$$W(r,h) = \begin{cases} \left(1 - 1.5\left(\frac{r}{h}\right)^2 + 0.75\left(\frac{r}{h}\right)^3\right) / \beta & 0 \le \frac{r}{h} < 1, \\ 0.25\left(2 - \frac{r}{h}\right)^3 / \beta & 1 \le \frac{r}{h} < 2, \\ 0 & 2 \le \frac{r}{h}. \end{cases}$$

(formula 2)

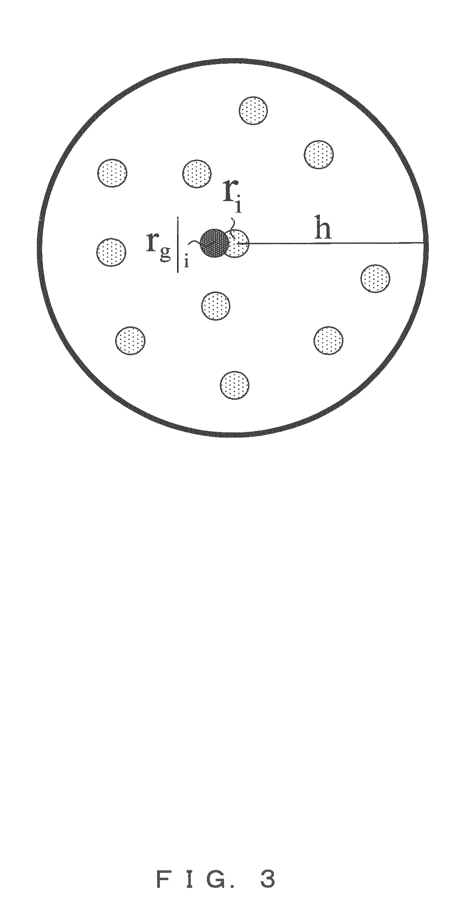

where
h
is a radius of influence between particles, and a radius twice to third times of an average particle spacing in an initial state is frequently used.
β
is a value obtained by adjusting an integral value of the entire space of the Kernel function to be 1. In a case of two dimensions, the value is decided to be
$0.7\pi h^2$
. In case of three dimensions, the value is decided to be $\pi h^3$
.
The above (formula 1) represents a gravity, weighted by the Kernel function, of particles within the radius h from the particle i as a center as illustrated in FIG. 3.

(Procedure 2)

A distance between the gravity of the (formula 1) and the particle i is calculated.

$$d_i = \left| \mathbf{r}_g \middle|_i - \mathbf{r}_i \right|$$

(formula 3)

(Procedure 3)

If a value of

$d_i$

is 0.15 times or more of the average particle spacing, the particle i is recognized as a particle of the surface, and a surface tension is applied.

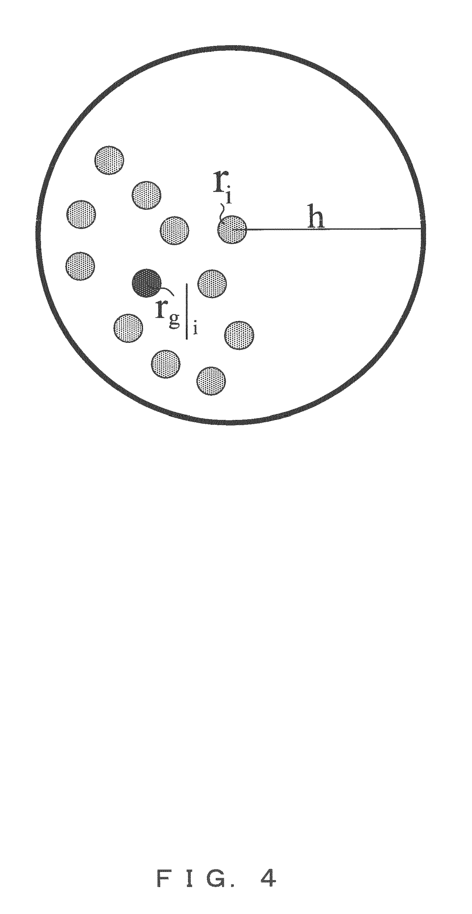

With these procedures 1 to 3, a particle having a non-uniform distribution of neighboring particles is recognized as a boundary particle as illustrated in FIG. 4, and a surface tension is applied. Also if an internal particle happens to have a value of

$d_i$

exceeding 0.15 times of the average particle spacing during the calculation, the surface tension is applied.

SUMMARY

It is an object in one aspect of the present invention to prevent simulation results from exhibiting non-physical behaviors.

According to an aspect of the embodiments, a simulation program, a simulation method or a simulation apparatus, which simulates a surface tension of a fluid and causes a computer to execute a process including calculating an interface of a fluid model that expresses the fluid as a collection of particles based on input boundary condition and initial condition, calculating surface energy of the calculated interface, calculating a surface tension of the interface based on the calculated surface energy, and outputting a state of the fluid for each specified time interval based on the calculated surface tension, is provided.

BRIEF DESCRIPTION OF DRAWINGS

FIG. 1 is an explanatory view of a problem of particle methods;
FIG. 2 is an explanatory view of an attractive force between particles;
FIG. 3 illustrates a weighted gravity of particles;
FIG. 4 illustrates a gravity of boundary particles;
FIG. 5 illustrates a configuration example of a simulation apparatus according to the present invention;
FIG. 6 is an explanatory view of a method for obtaining a closed curve that includes a point group;
FIG. 7 illustrates a closed curve that results in a convex hull;
FIG. 8 is a flowchart illustrating a process for obtaining a closed curve that includes a point group;
FIG. 9 is an explanatory view of a method for obtaining a concave portion;
FIG. 10 illustrates a closed curve modified with a method for obtaining a concave portion;
FIG. 11 is a flowchart illustrating a process for obtaining a concave portion;

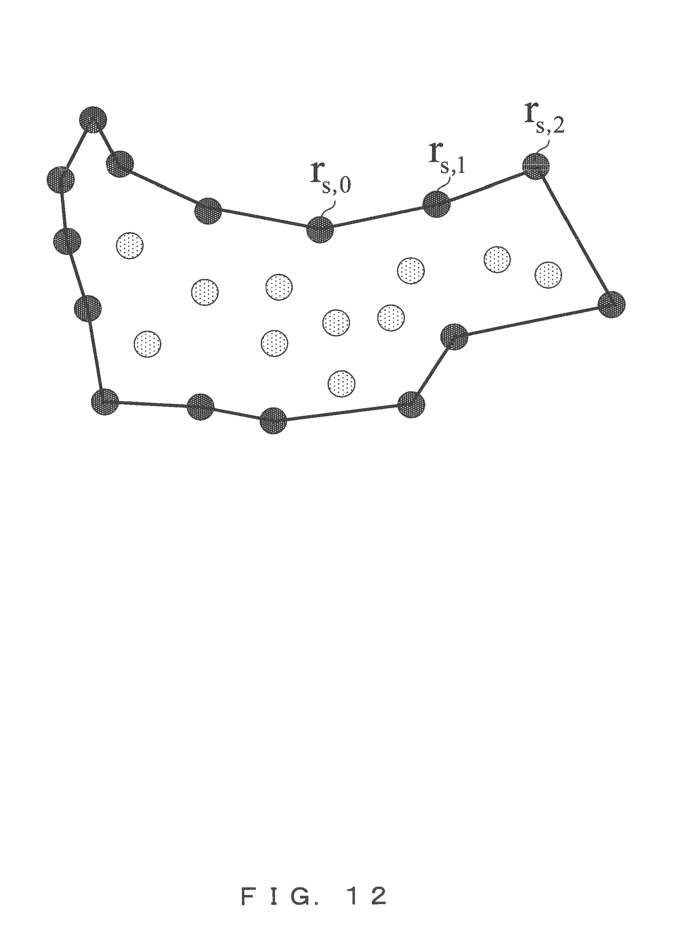

FIG. 12 illustrates a point sequence of surface particles of a fluid;

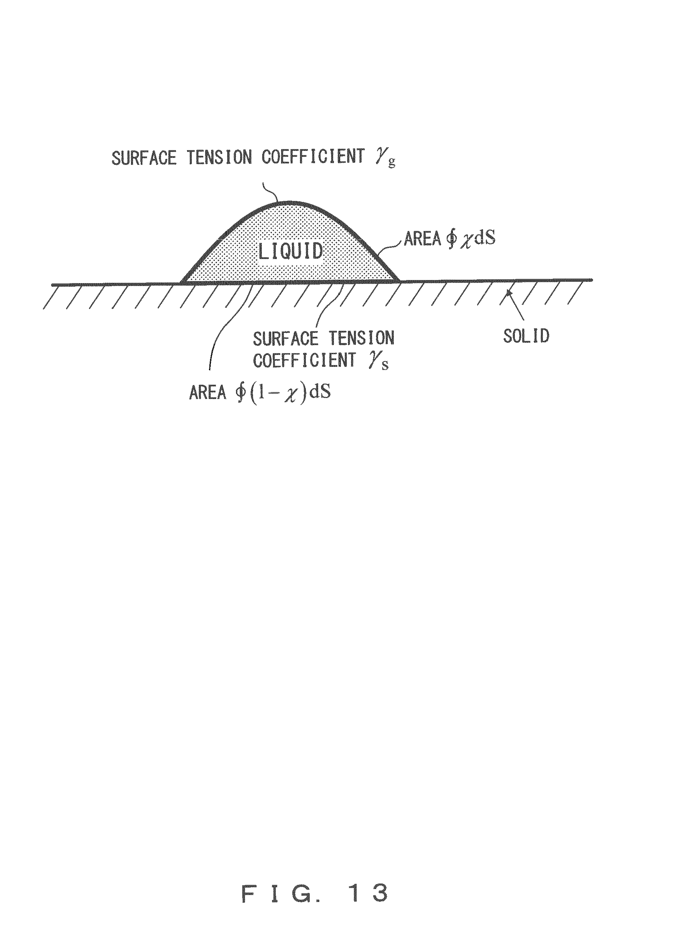

FIG. 13 is an explanatory view of surface tension coefficients;
FIG. 14 is an explanatory view of a function obtained by smoothly approximating X (chi) of surface energy with a width $\varepsilon$;
FIG. 15 is an explanatory view of an integral on a segment;
FIG. 16 is an explanatory view of an expression of a contact angle;
FIG. 17 illustrates a relationship between a distance from a solid and energy;
FIG. 18 is a flowchart illustrating flow of a calculation of a surface tension term;
FIG. 19 illustrates an example of a two-dimensional fluid;
FIG. 20 is a schematic (No. 1) illustrating wettability on a solid surface when a surface tension is applied;
FIG. 21 is a schematic (No. 2) illustrating wettability on a solid surface when a surface tension is applied; and
FIG. 22 illustrates a configuration of an information processing device.

DESCRIPTION OF EMBODIMENTS

Embodiments according to the present invention are described in detail with reference to the drawings.

The embodiments according to the present invention are implemented as a simulation program, a simulation method and a simulation apparatus, which are implemented by a computer. According to the embodiments, a fluid to be simulated is recognized as a collection of particles, and an interface is obtained from particles present at an interface that configures a boundary between the fluid to be simulated and a gas or a solid other than the fluid on the basis of a distribution of the particles (distribution of points) by using a computational geometry technique based on a convex hull construction method. Then, surface energy is expressed with the particles that configure the interface, and a first variation of the surface energy is calculated, so that a surface tension term is calculated.

Here, a liquid phase, a phase in a liquid state, a gas phase, a phase in a gas state, and a solid phase, a phase in a solid state, which make contact with the fluid to be simulated by a particle method via an interface, are called other phases.

Additionally, when surface energy is formed, a model that can express wettability and an attachment phenomenon of a fluid by varying the magnitude of a surface tension for each surface is employed, and a difference calculus is performed.

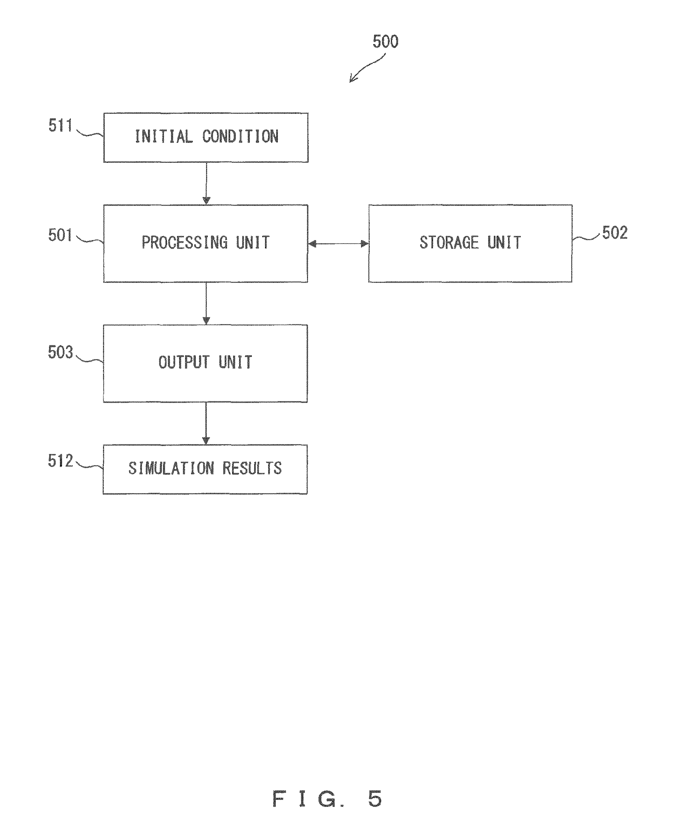

FIG. 5 illustrates a configuration example of a simulation apparatus according to the present invention.

In FIG. 5, a simulation apparatus 500 includes a processing unit 501, a storage unit 502, and an output unit 503. The simulation apparatus 500 performs numerical calculations with a particle method based on an initial condition 511, and outputs simulation results 512.

The storage unit 502 stores information about each calculation formula for executing a simulation program according to the present invention.

The processing unit 501 executes a simulation process according to the present invention, which will be described later as first to third embodiments.

The output unit 503 outputs the results 512 of the simulation performed by the processing unit 501.

(First embodiment)

A two-dimensional interface extraction method is described as the first embodiment.

Two-dimensional interface extraction in the first embodiment is realized by initially obtaining a closed curve that includes a two-dimensional particle swarm, and by obtaining a concave portion of the closed curve next.

A method for obtaining a closed curve is initially described.

A two-dimensional particle swarm (point group)

$\mathbf{r}_i$

is considered. Here, i represents a particle number.

A method for obtaining a closed curve that includes such a point group is described.

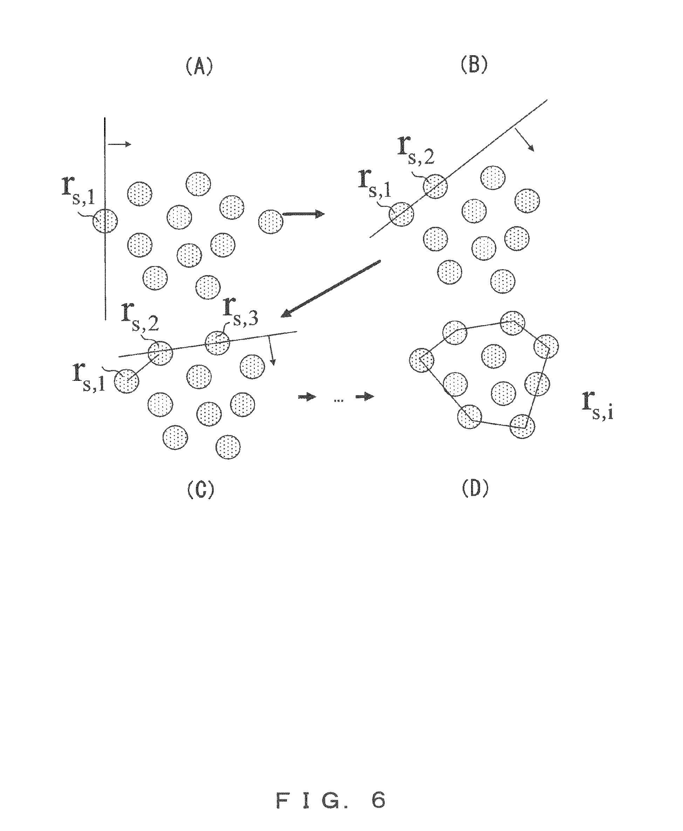

FIG. 6 is an explanatory view of the method for obtaining a closed curve that includes a point group.

The first embodiment refers to the method for obtaining a closed curve with first to fourth procedures by using a Gift Wrapping method, which is one of convex hull construction methods.

(First procedure)

Assume that a particle having a minimum x coordinate value within a point group

$\mathbf{r}_i$

Is

$\mathbf{r}_{s,1}$

(FIG. 6(A)).

(Second procedure)

An angle formed between a segment

$\mathbf{s}_i$

and

$\mathbf{r}_j - \mathbf{r}_{s,1}]$

is measured for a reference segment

$$\mathbf{s}_i = (0,1)$$

and all particles

$$\mathbf{r}_j$$

other than boundary particles, a minimum index j2 is searched, and

$$\mathbf{r}_{s,2} = \mathbf{r}_{j2}$$

is set (FIG. 6(B)).

(Third procedure)

The reference segment is set as

$$\mathbf{r}_{s,k}\text{-}\mathbf{r}_{s,k\text{-}1}$$

based on k=2, an angle formed between the reference segment and $\mathbf{r}_j$ - $\mathbf{r}_{s,k}$ is calculated, the minimum index j2 is searched, and

$$\mathbf{r}_{s,k+1} = \mathbf{r}_{j2}$$

is set.

(Fourth procedure)

k is incremented by 1, and the above described third procedure is repeated until

$$\mathbf{r}_{s,k} = \mathbf{r}_{s,1}$$

.

By linking a point sequence

$$\mathbf{r}_{s,i}$$

obtained with such procedures, a closed curve that results in a convex hull can be obtained.

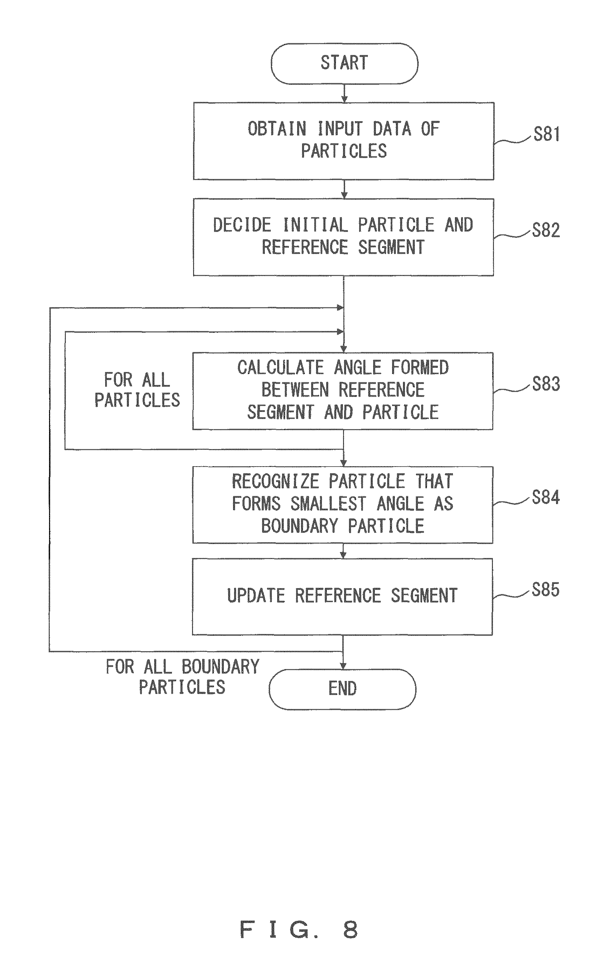

FIG. 8 is a flowchart illustrating a process for obtaining the closed curve that includes the point group.

In step S81, input data of particles is obtained. Step S81 corresponds to the above described first procedure.

In step S82, an initial particle and a reference segment, which are used in the above described first procedure, are decided. Then, in step S83, an angle formed between the reference segment and a particle is calculated for all the particles. These steps S82 and S83 correspond to the above described second procedure.

Then, a particle that forms a minimum angle is recognized as a boundary particle among all boundary particles in step S84, and the reference segment is updated in step S85. These steps S84 and S85 correspond to the above described third and fourth procedures.

A method for obtaining a concave portion with fifth to ninth procedures based on the point sequence $\mathbf{r}_{s,i}$ of the closed curve (convex hull) obtained as stated earlier is described next.

(Fifth procedure)

A distance

$$d_{i,i+1} = |\,\mathbf{r}_{s,i} - \mathbf{r}_{s,i+1}\,|$$

between a particle i and a particle i+1 is calculated.

(Sixth procedure)

The above described distance

$d_{j,j+1}$

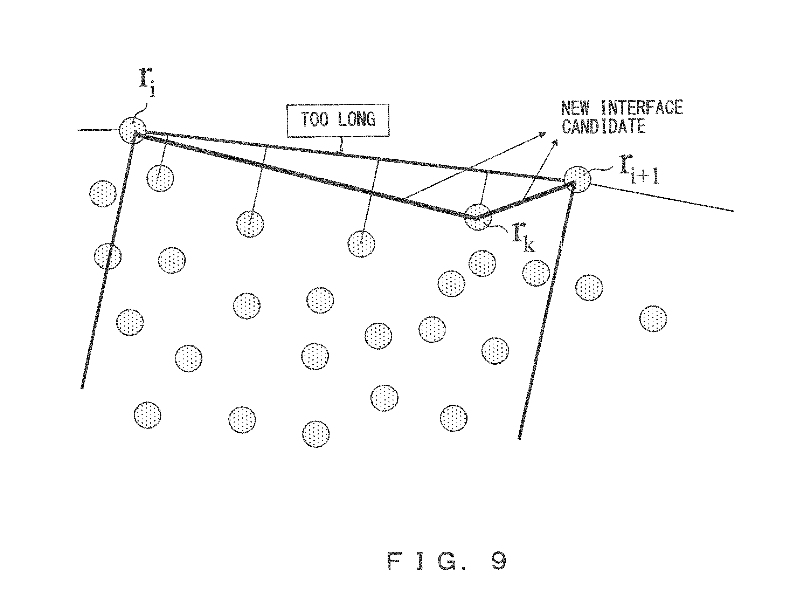

between the particles is larger (longer) than a specified threshold value (approximately several times of a radius of influence h), a particle

$\mathbf{r}_k$

having a minimum distance projected on a segment $\mathbf{r}_{s,i}$ - $\mathbf{r}_{s,i+1}$ within the particle swarm (excluding a case where the particle is not projected on a segment) is recognized as a new interface particle candidate as illustrated in FIG. 9.

(Seventh procedure)

If both

$|\mathbf{r}_{s,i}$ - $\mathbf{r}_k|$

And

$|\mathbf{r}_{s,i+1}$ - $\mathbf{r}_k|$

are smaller than

$|\mathbf{r}_{s,i}$ - $\mathbf{r}_{s,i+1}|$

,

$\mathbf{r}_k$

is interposed between ith and (i+1)th interface particles.

If the above described greatness-and-smallness relationship is not satisfied, the process proceeds to the ninth procedure to be described later.

(Eighth procedure)

The above described fifth to seventh procedures are repeated for the segments

$\mathbf{r}_{s,i}$ - $\mathbf{r}_k$

And

$\mathbf{r}_{s,i+1}$ - $\mathbf{r}_k$ . The process is terminated if the distance becomes smaller than the threshold value or if an interface candidate particle is not found.

(Ninth procedure)

The above described fifth to eighth procedures are executed for all i.

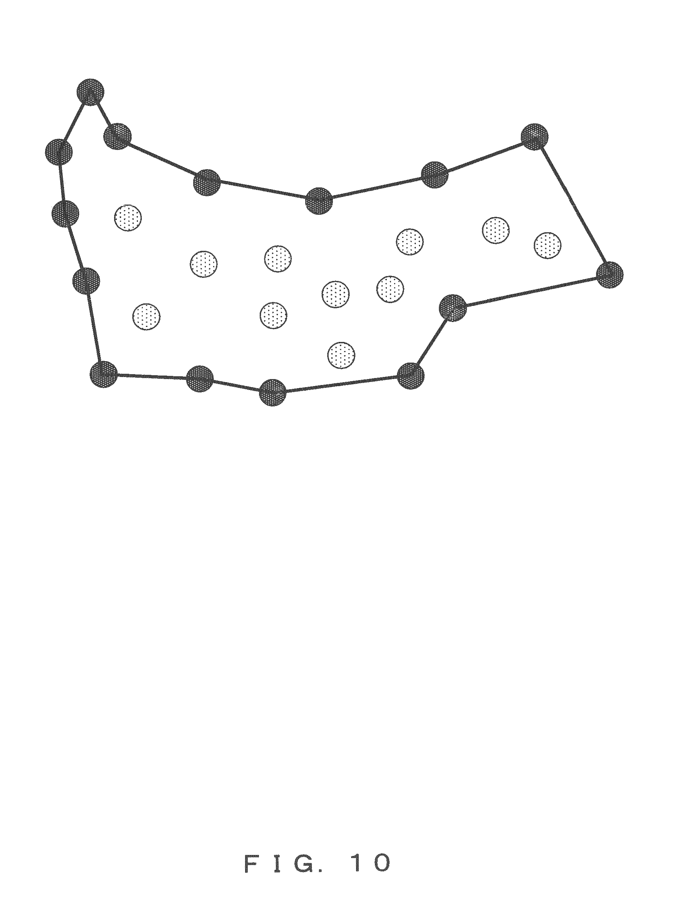

With such procedures, a concave portion illustrated in FIG. 10 can be obtained.

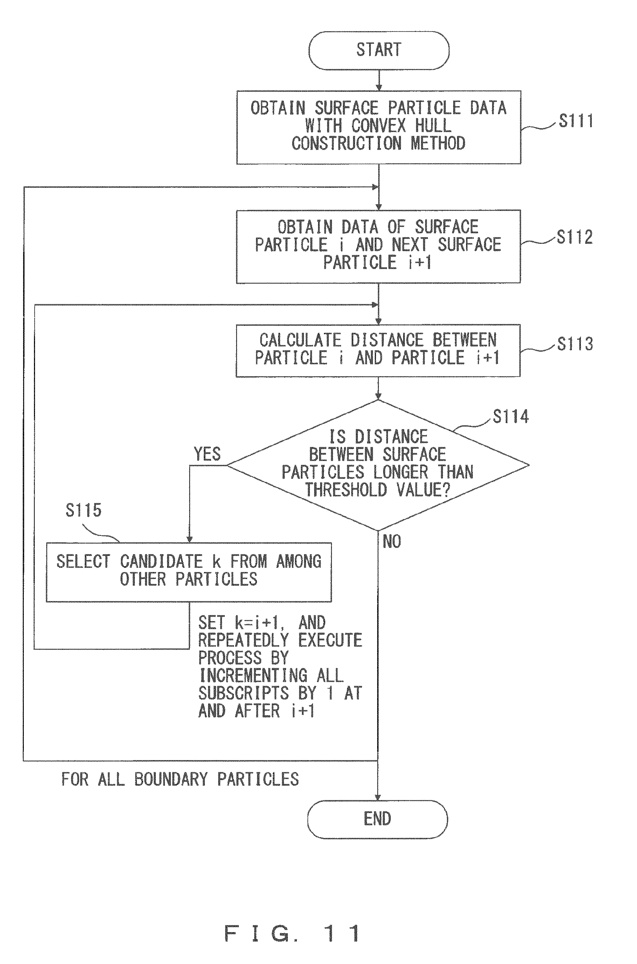

FIG. 11 is a flowchart illustrating a process for obtaining the concave portion.

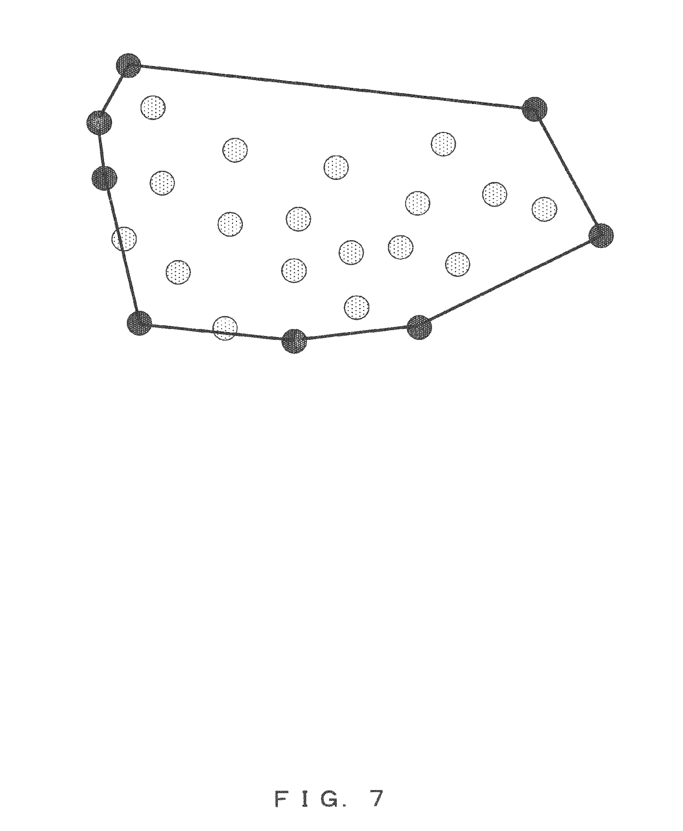

In step S111, data of surface particles acquired by the convex hull construction method described with reference to FIGs. 6 to 8 is obtained. In step S112, data of the surface particle i and the next surface particle i+1 are obtained.

In step S113, a distance between the particle i and the particle i+1 is calculated. This step S113 corresponds to the above described fifth procedure.

In step S114, it is determined whether or not the distance between the surface particles is longer than the specified threshold value. If the distance is longer than the specified threshold value ("YES" in step S114), a candidate k is selected from among other particles in step S115, k is set to the above described i+1, and the processes in and after the above described step S113 are repeated. step S114 (YES) and the flow returning from step S115 to step S113 correspond to the above described sixth to eighth procedures.

Then, steps S112 to S114 are executed for all the boundary particles (i). This corresponds to the above described ninth procedure.

(Second embodiment)

A method for calculating a surface tension term is described as the second embodiment.

With the calculation of the surface tension term in the second embodiment, a surface tension is calculated based on the closed curve obtained according to the above described first embodiment.

Assume that, positions of surface particles are obtained as a point sequence

$$\mathbf{r}_{s,i}\,(i = 0, \cdots, n-1)$$

according to the above described first embodiment, and a surface is configured with particles i and i+1 in case of two dimensions, or a surface is configured with a triangular element among three points in case of three dimensions.

Surface energy of a fluid can be generally defined as follows.

$$E_s = \oint \gamma_g \chi dS + \oint \gamma_s (1 - \chi) dS$$

(formula 4)

Here, an integral domain on the right side of the above (formula 4) is the entire area of a boundary surface of the fluid, and

$\chi$

takes a value of 1 in a portion of the fluid exposed to the air, or takes a value of 0 in the other portions.

$\gamma_g, \gamma_s$

are respectively a surface tension coefficient of the portion exposed to the air, and a surface tension coefficient of the portion making contact with a solid. Here, how to express the above described ((formula 4) with a particle method is the key point of the present invention.

According to the present invention, surface energy is obtained as follows by using a point sequence $\mathbf{r}_{s,i}$ acquired with the interface extraction method.

$$E_{s,\varepsilon}(\mathbf{r}_{s,0}, \mathbf{r}_{s,1}, \cdots, \mathbf{r}_{s,i}, \cdots) =$$

$$\sum_j \left( \gamma_g \int_{e_{ji}} \chi_\varepsilon (d(\mathbf{r}(S)) - r_e) dS + \gamma_s \int_{e_j} (1 - \chi_\varepsilon (d(\mathbf{r}(S)) - r_e)) dS \right) + \alpha \sum_k \varphi(\mathbf{r}_{s,k})$$

(formula 5)

$$\varphi(\mathbf{r}_{s,k}) = \begin{cases} (1 - \log(d(\mathbf{r}_{s,k})/r_e) - d(\mathbf{r}_{s,k})/r_e), & d < r_e, \\ 0, & otherwise. \end{cases}$$

(formula 6)

Here,

$\chi_\varepsilon$

is a function obtained by smoothly approximating $\chi$

in the (formula 4) with the width

$\varepsilon$

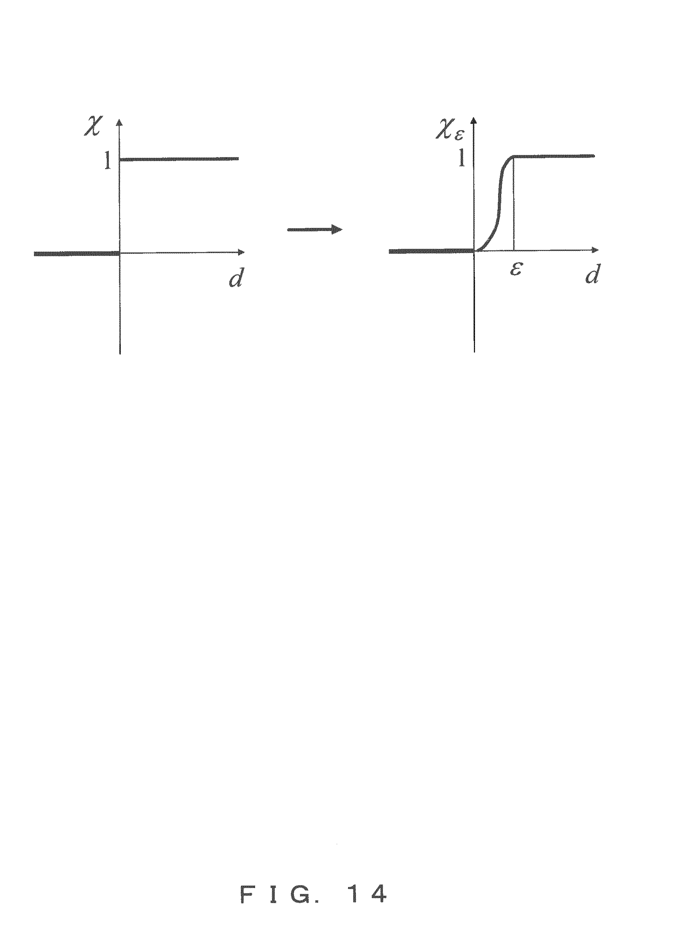

as illustrated in FIG. 14, and

$d$

is a function that represents a distance between a three-dimensional point

x

and the solid. For example, if a solid wall is present on a flat surface of y=0,

$$d(\mathbf{r}_{s,k}) = y_{s,k}$$

.

$\chi_\varepsilon(s)$

takes a value of 0 if

$s \leq 0$

, or takes a value of 1 if

$s \geq \varepsilon$

.

For a range of

$0 < s < \varepsilon$

, a function form for which an interpolation (such as a linear interpolation, an interpolation using a cubic function, or the like) is performed is used.

An integral range

$e_j$

is taken on a segment

$\mathbf{r}_{s,j+1} - \mathbf{r}_{s,j}$

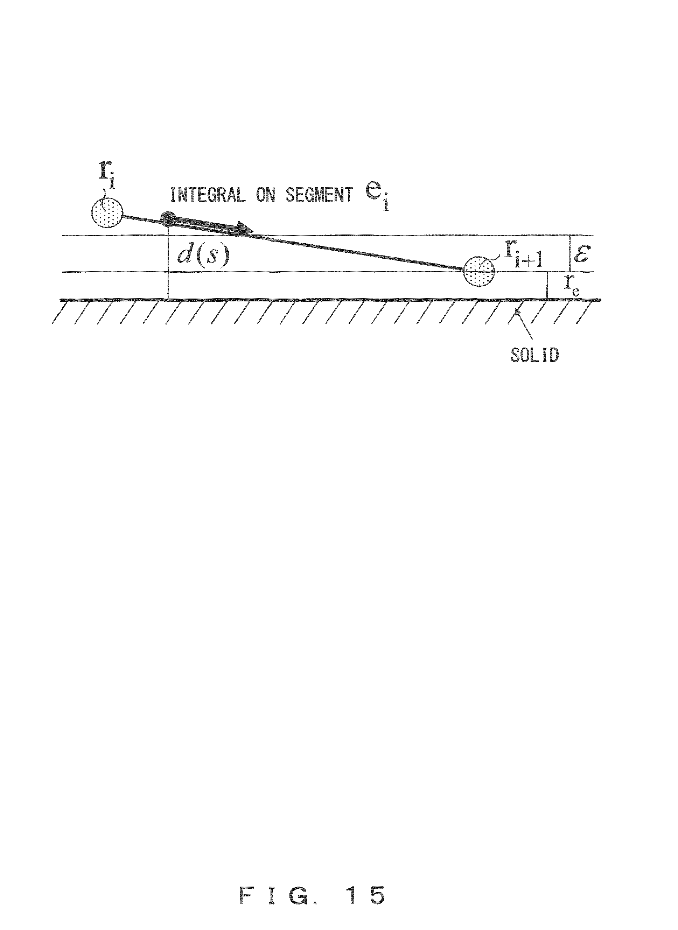

as illustrated in FIG. 15. As an integral calculation, a numerical integral can be performed by using a Gaussian integral or the like.

A sum (j) of the first term on the right side of the (formula 5) is taken between particles (between particles j and j+1), and a sum (k) of the second term is taken by using all the particles. The first term on the right side represents energy obtained by discretizing the surface energy of the (formula 4), whereas the second term on the right side represents potential energy that represents a boundary condition under which a particle does not pass through a wall. If the form represented by the (formula 6) is used, the potential of a particle infinitely diverges in a case where a distance to a solid is 0. Therefore, a non-physical behavior that gets over the wall of the solid can be prevented.

By using the energy represented by the (formula 5), a force applied to a surface particle

$\mathbf{r}_{s,i}$

can be calculated as follows.

$$\mathbf{F}_{s,i} = -\frac{\partial E_{s,\varepsilon}}{\partial \mathbf{r}_{s,i}}$$

$$(\text{formula } 7)$$

Note that the (formula 7) may be obtained with a difference approximation.

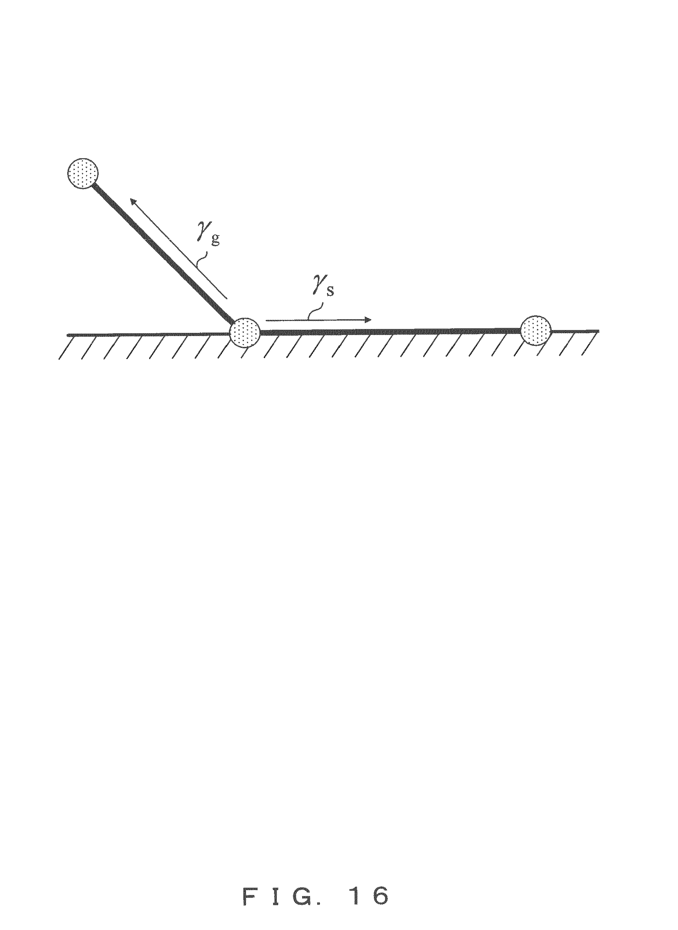

In the above described (formula 5), the surface tension coefficients differ depending on whether a surface makes contact with either a solid or a gas. The (formula 5) has a form that can express a contact angle based on this difference when the contact surface differs as illustrated in FIG. 16.

If

$\gamma_s < \gamma_g$

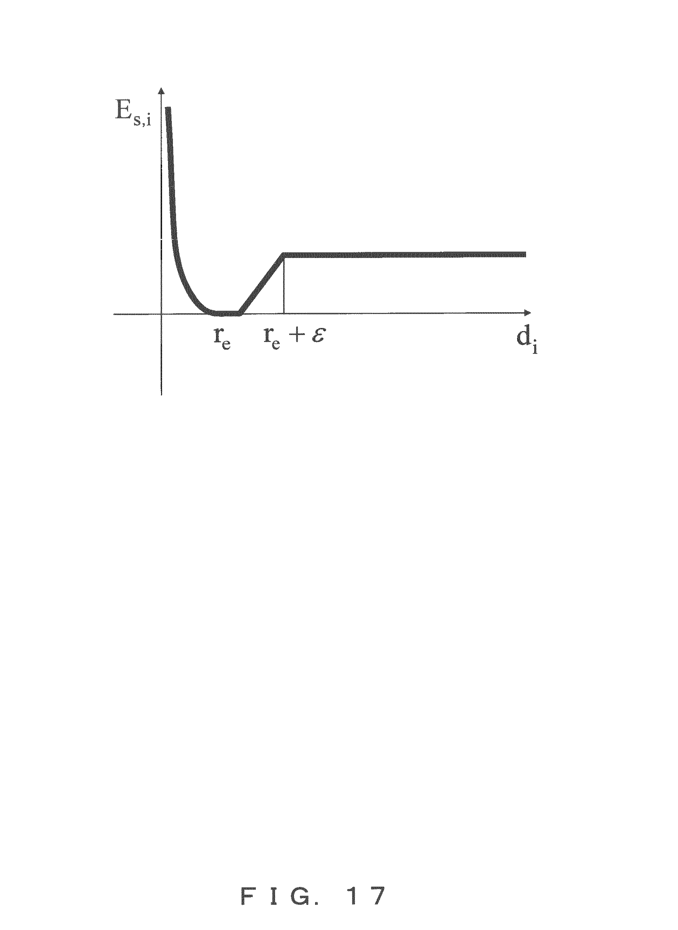

, energy becomes lower when the surface makes contact with the solid. Therefore, a force that attempts to attach to the solid occurs. With a particle method, the condition that a particle does not pass through a solid is represented as a potential (formula 6) of the neighborhood of a wall. Therefore, the particle does not make full contact with the solid. Accordingly, in the second embodiment, energy is set as represented by the (formula 5) as illustrated in FIG. 17, so that a repulsion force is received if a distance from the solid is equal to or shorter than

$r_e$

, or an attachment force is exerted if the distance from the solid is equal to or longer than

$r_e$

and shorter than

$\varepsilon + r_e$

.

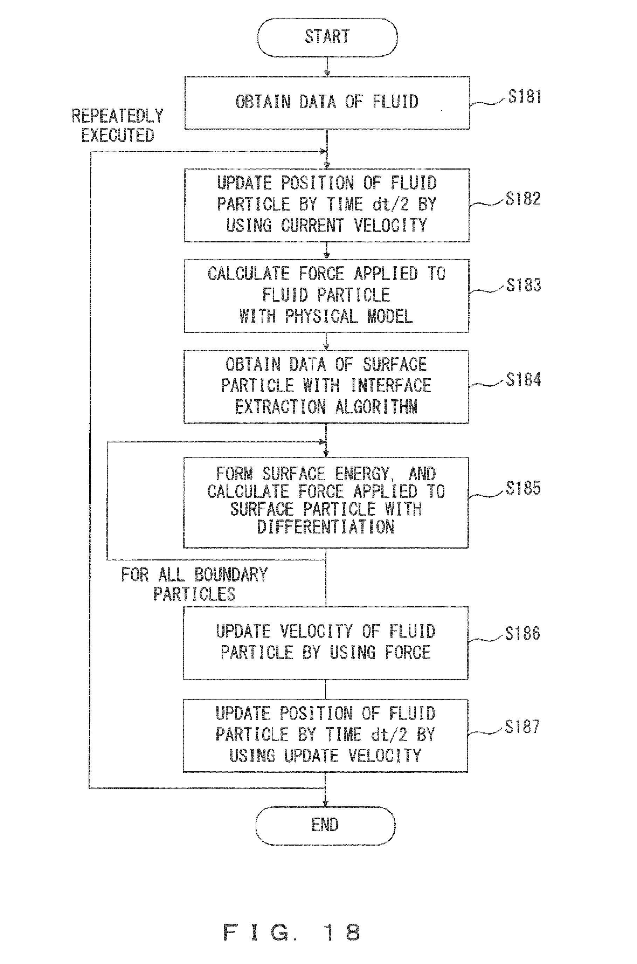

FIG. 18 is a flowchart illustrating a flow of the calculation of the surface tension term.

Initially, in step S181, data of a fluid to be simulated is obtained. In step S182, a position of a fluid particle is updated by a time dt/2 by using the current velocity. Then, in step S138, a force applied to the fluid particle is calculated with a physical model.

Next, in step S184, data of the surface particle of the fluid is obtained according to the above described first embodiment.

Then, in step S185, surface energy is obtained for all boundary particles as described above, and a force applied to the surface particle is calculated.

Upon terminating the calculation for all the boundary particles, the velocity of the fluid particle is updated in step S186, and the position of the fluid particle is updated by a time dt/2 by using the updated velocity in step S187.

Then, the above described steps S182 to S187 are repeatedly executed.

(Third embodiment)

A method for introducing a surface tension when a motion of an incompressive viscous fluid is calculated with an SPH method is described as the third embodiment.

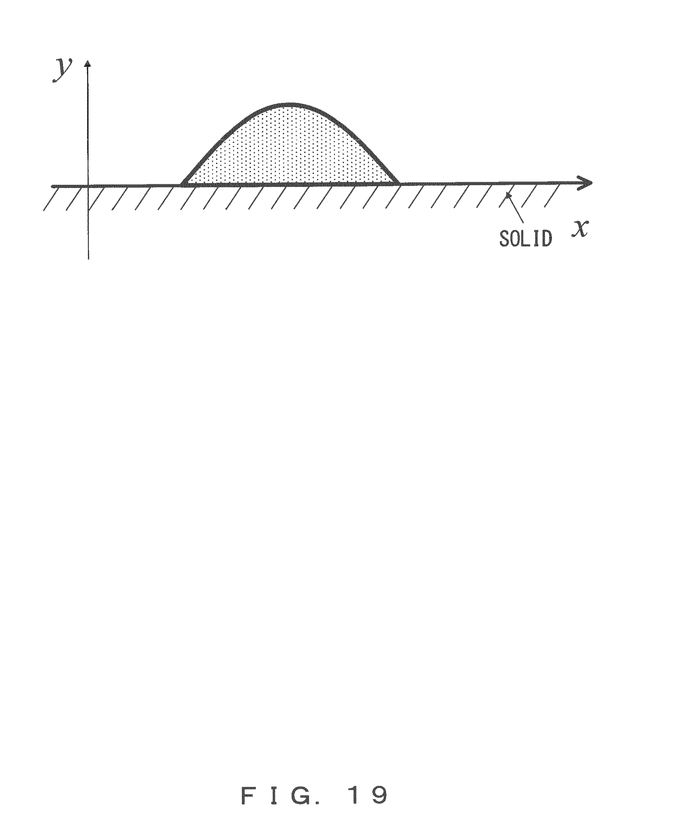

FIG. 19 illustrates an example of a two-dimensional fluid.

A motion equation of an incompressive viscous fluid in a situation (where the fluid is located on a flat surface of y=0, and the y direction is orientated vertically upward as illustrated in FIG. 19) is considered.

$$\frac{D\rho}{Dt} = -\rho\nabla \cdot \mathbf{v},$$

(formula 8)

$$\frac{D\mathbf{v}}{Dt} = -\frac{1}{\rho}\nabla p + \nabla \cdot \Pi - g\mathbf{y},$$

(formula 9)

$$p = c^2(\rho - \rho_0),$$

(formula 10)

Where

$\rho(\mathbf{r},t), \mathbf{v}(\mathbf{r},t), p(\mathbf{r},t), c$

are respectively a density field, a velocity field, a pressure field and a sound velocity of the fluid.

The (formula 8), the (formula 9) and the (formula 10) are respectively a mass conservation law, a momentum conservation law, and a state equation.

$\Pi$

is a viscous stress tensor. Assuming that a viscosity coefficient of the fluid is

$\mu$

(constant),

$$\Pi = \frac{\mu}{2}\left(\nabla\mathbf{v} + \nabla\mathbf{v}^{\mathrm{T}}\right)$$

.

The (formula 8) represents an effect such that a density increases if there is a velocity field where a fluid gathers, or decreases if there is a velocity field where the fluid spreads. A first term on the right side of the (formula 9) is a pressure gradient term, which represents an effect such that a force occurs from a high pressure portion toward a low pressure portion of the fluid. A second term on the right side is a viscosity stress term, which represents an effect such that the flow is deaccelerated. A third term on the right side is a gravity term.

$g$

is a gravitational acceleration, and

$\mathbf{y}$

is a unit vector in the y direction.

In the third embodiment, only the relationship between a density and a pressure, which is represented by the above described (formula 10) is used. However, a state equation using a normal temperature, internal energy, entropy or the like may be used.

Also assume that a surface tension coefficient (constant) $\gamma_g$

is applied to a portion exposed to the air, and a surface tension coefficient (constant)

$\gamma_s$

is applied to a portion making contact with a solid.

The fluid is discretized with the SPH method represented by the (formula 8) to the (formula 10), and the surface tension term calculated according to the above described second embodiment is introduced, so that the following formulas are obtained.

$$\mathbf{r}_a^* = \mathbf{r}_a^n + \frac{dt}{2}\mathbf{v}_a^n,$$

(formula 11)

$$\mathbf{v}_a^{n+1} = \mathbf{v}_a^n - 2dt\left[\sum_b m_b\left(\frac{p_{ab}^{n+1/2}}{\rho_b^n \rho_a^n}\right)\left(\frac{L_2(\mathbf{r}_a^*) + L_2(\mathbf{r}_b^*)}{2}\right)\frac{\mathbf{r}_a^* - \mathbf{r}_b^*}{|\mathbf{r}_a^* - \mathbf{r}_b^*|}\frac{\partial W(r_{ab}^*, h)}{\partial r_{ab}^*}\right]$$
$$-\frac{1}{2}\sum_b m_b\left(\frac{4\mu\xi}{\rho_a \rho_b}\frac{\mathbf{v}_{ab}\cdot\mathbf{r}_{ab}^*}{r_{ab}^2 + \eta^2}\right)v_{ab}^i\frac{\partial W(r_{ab}, h)}{\partial \mathbf{r}_a^*}$$
$$-g\mathbf{y} - \frac{1}{m_a}\frac{\partial E_2}{\partial \mathbf{r}_a^*},$$

(formula 12)

$$\rho_a^{n+1} = \rho_a^n + 2dt\sum_b \frac{m_b\rho_a^n}{\rho_b^n}\left(\frac{v_a^{s,n+1} + v_a^{s,n}}{2} - v_{ab}^{s,n+1/2}\right)\frac{\partial}{\partial r_{ab}^*}W(r_{ab}^*, h),$$

(formula 13)

$$\mathbf{r}_a^{n+1} = \mathbf{r}_a^* + \frac{dt}{2}\mathbf{v}_a^{n+1}.$$

(formula 14)

Where a subscript represents a particle number. Namely, a position vector, a velocity vector, a density and a pressure of the a-th particle are respectively

$\mathbf{r}_a, \mathbf{v}_a, \rho_a, p_a$
.

$m_b$

is the b-th mass.

$\xi, \eta$

are parameters (constants) introduced to calculate the viscosity term.

The (formula 12) is obtained by discretizing the motion equation of the above described (formula 9) with a particle method. A second term and a third term on the right side respectively represent a pressure gradient term and a viscous stress term. Here,

$y_a$

is a component in the y direction of

$\mathbf{r}_a$
, and

$E_2$

is surface energy, which is represented by a form similar to the above described (formula 5). Specifically, the following discretized form is employed.

$$E_2 = \sum_j \left( (\gamma_g - \gamma_s) \frac{\left( \chi_\varepsilon(y_{s,j} - r_e) + \chi_\varepsilon(y_{s,j+1} - r_e) \right)}{2} + \gamma_s \right) | \mathbf{r}_{s,j+1} - \mathbf{r}_{s,j} | + \alpha \sum_b \varphi_{y=0}(\mathbf{r}_b^*)$$

(formula 15)

Where

$\varphi_{y=0}$

is potential energy that represents a repulsion force received from a wall present at y=0, and

$$\varphi_{y=0}(\mathbf{r}_b) = \begin{cases} \left(1 - \log(y_b / r_e) - y_b / r_e\right), & y_a < r_e, \\ 0, & otherwise. \end{cases}$$

is used.

$\alpha$

is a constant.

$\mathbf{r}_{s,i}$

is a surface particle extracted according to the above described first embodiment, and corresponds to any one particle within a particle swarm

$\mathbf{r}_a$

.

A differentiation

$$\mathbf{f}_{s,a} = \frac{\partial E_2}{\partial \mathbf{r}_a^*}$$

of the above described (formula 15) is calculated as follows.

If

$\mathbf{r}_a$

does not correspond to the surface particle

$\mathbf{r}_{s,i}$

,

$$f_{s,a,x} = 0$$

and

$$f_{s,a,y} = \alpha \frac{\partial \varphi_{y=0}(\mathbf{r}_a)}{\partial y_a}$$

.

If the

$\mathbf{r}_a$

corresponds to the surface particle $\mathbf{r}_{s,i}$

,

$$f_{s,a,x} = \left[ (\gamma_g - \gamma_s) \left( \frac{\chi_\varepsilon (y_{s,i+1} - r_e) + \chi_\varepsilon (y_{s,i} - r_e)}{2} \right) + \gamma_s \right] \left( \frac{x_{s,i} - x_{s,i+1}}{|\mathbf{r}_{s,i+1} - \mathbf{r}_{s,i}|} \right)$$
$$+ \left[ (\gamma_g - \gamma_s) \left( \frac{\chi_\varepsilon (y_{s,i} - r_e) + \chi_\varepsilon (y_{s,i-1} - r_e)}{2} \right) + \gamma_s \right] \left( \frac{x_{s,i} - x_{s,i-1}}{|\mathbf{r}_{s,i} - \mathbf{r}_{s,i-1}|} \right)$$

and

$$f_{s,a,y} = (\gamma_g - \gamma_s) \left( \frac{\chi_\varepsilon' (y_{s,i+1} - r_e) + \chi_\varepsilon' (y_{s,i} - r_e)}{2} \right) |\mathbf{r}_{s,i+1} - \mathbf{r}_{s,i}|$$
$$+ (\gamma_g - \gamma_s) \left( \frac{\chi_\varepsilon' (y_{s,i} - r_e) + \chi_\varepsilon' (y_{s,i-1} - r_e)}{2} \right) |\mathbf{r}_{s,i} - \mathbf{r}_{s,i-1}|$$
$$+ \left[ (\gamma_g - \gamma_s) \left( \frac{\chi_\varepsilon (y_{s,i+1} - r_e) + \chi_\varepsilon (y_{s,i} - r_e)}{2} \right) + \gamma_s \right] \left( \frac{y_{s,i} - y_{s,i+1}}{|\mathbf{r}_{s,i+1} - \mathbf{r}_{s,i}|} \right)$$
$$+ \left[ (\gamma_g - \gamma_s) \left( \frac{\chi_\varepsilon (y_{s,i} - r_e) + \chi_\varepsilon (y_{s,i-1} - r_e)}{2} \right) + \gamma_s \right] \left( \frac{y_{s,i} - y_{s,i-1}}{|\mathbf{r}_{s,i} - \mathbf{r}_{s,i-1}|} \right) + \alpha \frac{\partial \varphi_{y=0}(\mathbf{r}_a)}{\partial y_a}$$

are calculated, so that

$$\mathbf{f}_{s,a} = (f_{s,a,x}, f_{s,a,y})$$

is obtained.

Additionally, $L_2(\mathbf{r}_a^*)$

is a two-dimensional re-standardized matrix

$$L_2(\mathbf{r}_a^*) = \begin{pmatrix} \sum_b (x_b^* - x_a^*) \frac{\partial}{\partial x} W(|\mathbf{r}_a^* - \mathbf{r}_b^*|, h) & \sum_b (x_b^* - x_a^*) \frac{\partial}{\partial y} W(|\mathbf{r}_a^* - \mathbf{r}_b^*|, h) \\ \sum_b (y_b^* - y_a^*) \frac{\partial}{\partial x} W(|\mathbf{r}_a^* - \mathbf{r}_b^*|, h) & \sum_b (y_b^* - y_a^*) \frac{\partial}{\partial y} W(|\mathbf{r}_a^* - \mathbf{r}_b^*|, h) \end{pmatrix}^{-1}$$

(formula 16)

, and

$$(\mathbf{r} = (x, y))$$

. Here,

$$\mathbf{r}_{ab}^* = \mathbf{r}_a^* - \mathbf{r}_b^*$$

,

$$r_{ab}^* = \left| \mathbf{r}_{ab}^* \right|$$

,

$$v_a^{s,n} = \mathbf{v}_a^n \cdot \frac{\mathbf{r}_{ab}^*}{\left| \mathbf{r}_{ab}^* \right|}$$

, and

$$v_b^{s,n} = \mathbf{v}_b^n \cdot \frac{\mathbf{r}_{ab}^*}{\left| \mathbf{r}_{ab}^* \right|}$$

· $p_{ab}^{n+1/2}, v_{ab}^{s,n+1/2}$

is an intermediate value in a time space, which is obtained by solving a one-dimensional Riemann problem between particles a and b. Specifically, this intermediate value is decided as follows.

The following characteristic quantities are defined for the particles a and b.

$$q_a^{n,+} = \log(\rho_a^n) + \frac{v_a^{s,n}}{c}$$

(formula 17)

$$q_a^{n,-} = \log(\rho_a^n) - \frac{v_a^{s,n}}{c}$$

(formula 18)

$$q_b^{n,+} = \log(\rho_b^n) + \frac{v_b^{s,n}}{c}$$

(formula 19)

$$q_b^{n,-} = \log(\rho_b^n) - \frac{v_b^{s,n}}{c}$$

(formula 20)

Additionally, gradients are respectively calculated as follows.

$$\nabla \log(\rho)\big|_a = \sum_k \frac{m_k}{\rho_a}\big(\log(\rho_k) - \log(\rho_a)\big)\frac{\partial W(|\mathbf{r}_a^* - \mathbf{r}_k^*|,h)}{\partial \mathbf{r}_a^*}$$

(formula 21)

$$\nabla \mathbf{v}\big|_{a,2} = \begin{pmatrix} \sum_k \frac{m_k}{\rho_a}\big(v_k^x - v_a^x\big)\frac{\partial W(|\mathbf{r}_a^* - \mathbf{r}_k^*|,h)}{\partial x_a^*} & \sum_k \frac{m_k}{\rho_a}\big(v_k^y - v_a^y\big)\frac{\partial W(|\mathbf{r}_a^* - \mathbf{r}_k^*|,h)}{\partial x_a^*} \\ \sum_k \frac{m_k}{\rho_a}\big(v_k^x - v_a^x\big)\frac{\partial W(|\mathbf{r}_a^* - \mathbf{r}_k^*|,h)}{\partial y_a^*} & \sum_k \frac{m_k}{\rho_a}\big(v_k^y - v_a^y\big)\frac{\partial W(|\mathbf{r}_a^* - \mathbf{r}_k^*|,h)}{\partial y_a^*} \end{pmatrix}$$

(formula 22)

$$\nabla q\big|_a^{n,+} = \nabla \log(\rho)\big|_a + \frac{\nabla \mathbf{v}\big|_{a,2}\mathbf{r}_{ab}}{c}$$

(formula 23)

$$\nabla q\big|_b^{n,+} = \nabla \log(\rho)\big|_b + \frac{\nabla \mathbf{v}\big|_{b,2}\mathbf{r}_{ab}}{c}$$

(formula 24)

$$\nabla q\big|_a^{n,-} = \nabla \log(\rho)\big|_a - \frac{\nabla \mathbf{v}\big|_{a,2}\mathbf{r}_{ab}}{c}$$

(formula 25)

$$\nabla q\big|_b^{n,-} = \nabla \log(\rho)\big|_b - \frac{\nabla \mathbf{v}\big|_{b,2}\mathbf{r}_{ab}}{c}$$

(formula 26)

Here, superscripts of the velocity (v) in the above described (formula 22) respectively represent components.

By using these formulas, $p_{ab}^{n+1/2}, v_{ab}^{s,n+1/2}$

is decided as follows.

$$q_{ab}^{n+1/2,+} = q_b^{n,+} + \left( \frac{|\mathbf{r}_{ab}|}{2} - \frac{cdt}{2} \right) \left( \mathbf{r}_{ab} \cdot \nabla q \big|_b^{n,+} \right)$$

(formula 27)

$$q_{a,b}^{n+1/2,-} = q_a^{n,+} - \left( \frac{|\mathbf{r}_{ab}|}{2} + \frac{cdt}{2} \right) \left( \mathbf{r}_{ab} \cdot \nabla q \big|_a^{n,-} \right)$$

(formula 28)

$$\rho_{ab}^{n+1/2} = \exp\left( \frac{q_{ab}^{n+1/2,+} + q_{ab}^{n+1/2,-}}{2} \right)$$

(formula 29)

$$v_{ab}^{n+1/2} = c\left( \frac{q_{ab}^{n+1/2,+} - q_{ab}^{n+1/2,-}}{2} \right)$$

(formula 30)

$$p_{ab}^{n+1/2} = c^2\left( \rho_{ab}^{n+1/2} + \rho_0 \right)$$

(formula 31)

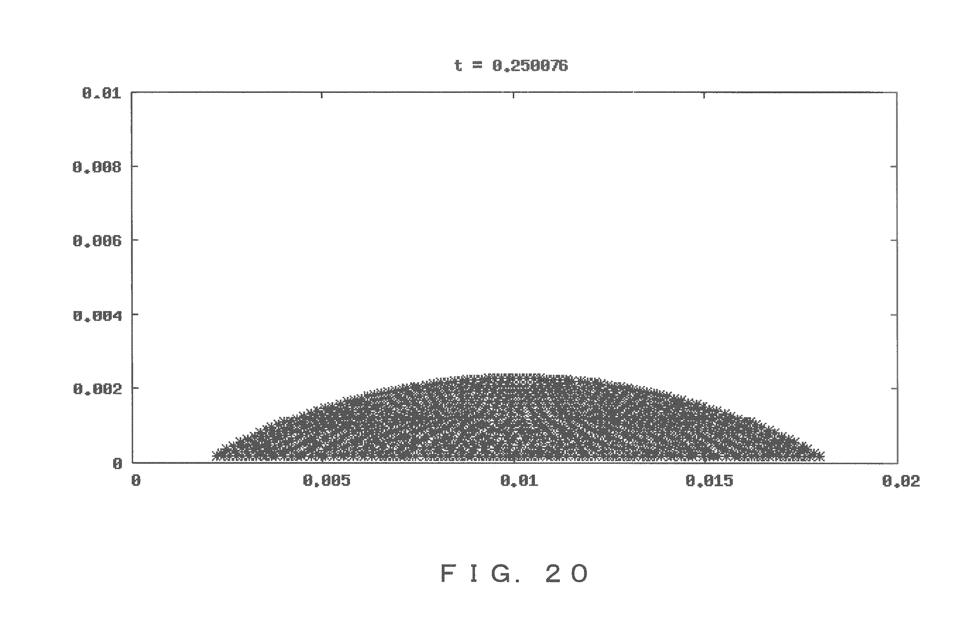

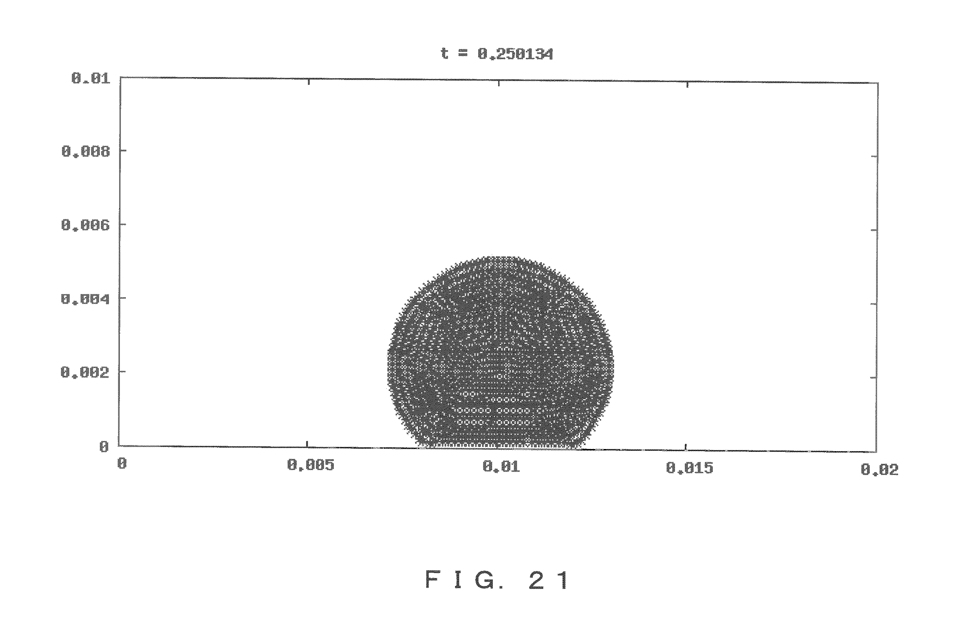

FIGs. 20 and 21 represent wettability on a solid surface when a surface tension is applied with the above described method. FIG. 20 illustrates a case where

$$\gamma_g = 0.1$$

and

$$\gamma_s = -\frac{\sqrt{3}\gamma_g}{2}$$

,
and FIG. 21 illustrates a case where

$$\gamma_g = 0.1$$

and

$$\gamma_s = \frac{\gamma_g}{2}$$

.

FIGs. 20 and 21 illustrate shapes of the fluid when it is standing still. By changing the surface tension coefficients, these figures can depict a difference between the contact angles.

As described above, the present invention is applicable to a calculation of a fluid motion for which a surface tension is effective by using a calculation of a particle method. Especially, the present invention is effective, by way of example, for a simulation for pouring a molten metal or a resin.

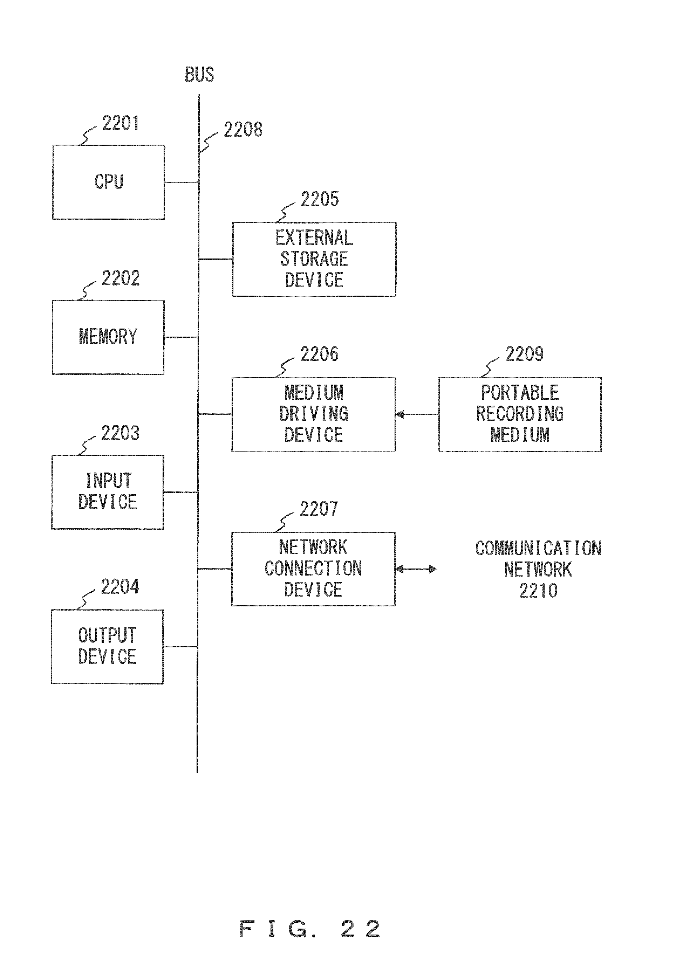

The simulation apparatus illustrated in FIG. 5 can be implemented, for example, by using an information processing device (computer) illustrated in FIG. 22. The information processing device illustrated in FIG. 22 includes a CPU (Central Processing Unit) 2201, a memory 2202, an input device 2203, an output device 2204, an external storage device 2205, a medium driving device 2206 and a network connection device 2007, which are interconnected by a bus 2208.

The memory 2202 is a semiconductor memory such as a ROM (Read Only Memory), a RAM (Random Access Memory), a flash memory or the like, and stores a program and data, which are used for a simulation process. For example, the CPU 2201 executes the above described simulation process by executing the program with the memory 2202. The memory 2202 is available also as the storage unit 502 of FIG. 5.

The input device 2203 is, for example, a keyboard, a pointing device or the like, and used to input an instruction or information from an operator. The output device 2204 is, for example, a display device, a printer, a speaker or the like, and used to output an inquiry or processing results to an operator. The output device 2204 is available also as the output unit 503 of FIG. 5.

The external storage device 2205 is, for example, a magnetic disk device, an optical disk device, a magneto-optical disk device, a tape device or the like. The external storage device 2205 includes also a hard disk derive. The information processing device stores a program and data in the external storage device 2205. The information processing device can use the program and the data by loading them into the memory 2202.

The medium driving device 2206 drives a portable recording medium 2209, and accesses its recorded contents. The portable recording medium 2209 is, for example, a memory device, a flexible disk, an optical disk, a magneto-optical disk or the like. The portable recording medium 2209 also includes a CUD-ROOM (Compact Disk Read Only Memory), a DVD (Digital Versatile Disk), a USB (Universal Serial Bus) memory, and the like. An operator stores a program and data onto the portable recording medium 2209. The operator can use the program and the data by loading them into the memory 2202.

As described above, the computer-readable recording medium that stores a program and data, which are used for the simulation process, includes a physical (non-transitory) recording medium such as the memory 2202, the external storage device 2205, and the portable recording medium 2209.

The network connection device 2207 is a communication interface that is connected to a communication network 2210, and performs a data conversion accompanying a communication. The information processing device receives a program and data from an external device via the network connection device 2207. The information processing device can use the program and the data by loading them into the memory 2202. The network connection device 2207 is available also as the output unit 503 of FIG. 5.

The disclosed embodiments and their advantages have been described in detail. A person having ordinary skill in the art could make various modifications, additions and omissions without departing from the spirit and scope of the invention explicitly recited in the claims.

With the disclosed simulation program, simulation method and simulation apparatus, suitable simulation results can be output without exhibiting non-physical behaviors.

**Claims**

1. A simulation program for causing a computer to execute a process for simulating a surface tension of a fluid, the process comprising:

   calculating an interface of a fluid model that expresses the fluid as a collection of particles based on input boundary condition and initial condition;
   calculating surface energy of the calculated interface;
   calculating a surface tension of the interface based on the calculated surface energy; and

outputting a state of the fluid for each specified time interval based on the calculated surface tension.

2. The simulation program according to claim 1, wherein
the calculating the surface energy of the calculated interface uses a calculation formula that is expressed with a sum of a first term for calculating surface energy of an interface with the air and a second term for calculating surface energy of an interface with a continuum phase other than the air.

3. The simulation program according to claim 2, wherein
the calculating the surface energy of the interface with the air changes a surface tension coefficient of the first term, and a surface tension coefficient of the second term.

4. A simulation method for causing a computer to simulate a surface tension of a fluid, the simulation method comprising:

calculating an interface of a fluid model that expresses the fluid as a collection of particles based on input boundary condition and initial condition;
calculating surface energy of the calculated interface;
calculating a surface tension of the interface based on the calculated surface energy; and
outputting a state of the fluid for each specified time interval based on the calculated surface tension.

5. A simulation apparatus for simulating a surface tension of a fluid, the simulation apparatus comprising:

an input unit configured to input various conditions including a boundary condition and an initial condition;
an interface calculation unit configured to calculate an interface of a fluid model that expresses the fluid as a collection of particles based on the input boundary condition and initial condition;
a surface energy calculation unit configured to calculate surface energy of the calculated interface;
a surface tension calculation unit configured to calculate a surface tension of the interface based on the calculated surface energy; and
an output unit configured to output a state of the fluid for each specified time interval based on the calculated surface tension.

$$\mathbf{r}_i$$

F I G. 1

F I G. 2

F I G. 3

F I G. 4

500

511 — INITIAL CONDITION

501 — PROCESSING UNIT ↔ STORAGE UNIT — 502

503 — OUTPUT UNIT

512 — SIMULATION RESULTS

F I G. 5

(A)

(B)

$r_{s,1}$

$r_{s,2}$

$r_{s,1}$

$r_{s,2}$

$r_{s,3}$

$r_{s,1}$

$r_{s,i}$

(C)

(D)

F I G. 6

F I G. 7

START

OBTAIN INPUT DATA OF
PARTICLES — S81

DECIDE INITIAL PARTICLE AND
REFERENCE SEGMENT — S82

FOR ALL
PARTICLES

CALCULATE ANGLE FORMED
BETWEEN REFERENCE
SEGMENT AND PARTICLE — S83

RECOGNIZE PARTICLE THAT
FORMS SMALLEST ANGLE AS
BOUNDARY PARTICLE — S84

UPDATE REFERENCE SEGMENT — S85

FOR ALL BOUNDARY
PARTICLES

END

F I G. 8

FIG. 9

F I G. 10

```
                    ┌─────────────┐
                    │    START    │
                    └─────────────┘
                           │
                           ▼
        ┌───────────────────────────────────┐
        │  OBTAIN SURFACE PARTICLE DATA      │
        │       WITH CONVEX HULL             │────── S111
        │    CONSTRUCTION METHOD             │
        └───────────────────────────────────┘
                           │
                           ▼
        ┌───────────────────────────────────┐
        │  OBTAIN DATA OF SURFACE            │
        │  PARTICLE i AND NEXT SURFACE       │────── S112
        │  PARTICLE i+1                      │
        └───────────────────────────────────┘
                           │
                           ▼
        ┌───────────────────────────────────┐
        │  CALCULATE DISTANCE BETWEEN        │────── S113
        │  PARTICLE i AND PARTICLE i+1       │
        └───────────────────────────────────┘
                           │
                           ▼
                                              S114
                     ◇ IS DISTANCE ◇
            YES      BETWEEN SURFACE
        ◀──────    PARTICLES LONGER THAN
                     THRESHOLD VALUE?
                                         │ NO
                                         │
    ┌──────────────────────────────┐
    │ SELECT CANDIDATE k FROM AMONG │   S115
    │      OTHER PARTICLES          │
    └──────────────────────────────┘
```

SET k=i+1, AND
REPEATEDLY EXECUTE
PROCESS BY
INCREMENTING ALL
SUBSCRIPTS BY 1 AT
AND AFTER i+1

FOR ALL BOUNDARY PARTICLES

```
                    ┌─────────────┐
                    │     END     │
                    └─────────────┘
```

F I G.   1 1

$r_{s,0}$ $r_{s,1}$ $r_{s,2}$

F I G. 1 2

SURFACE TENSION COEFFICIENT $\gamma_g$

LIQUID

AREA $\oint \chi dS$

SURFACE TENSION
COEFFICIENT $\gamma_s$

SOLID

AREA $\oint (1-\chi) dS$

F I G. 1 3

F I G. 1 4

$r_i$

INTEGRAL ON SEGMENT $e_i$

$d(s)$

$r_{i+1}$

$\varepsilon$

$r_e$

SOLID

F I G. 1 5

$\gamma_g$

$\gamma_s$

F I G.  1 6

F I G. 1 7

START

OBTAIN DATA OF FLUID — S181

REPEATEDLY
EXECUTED

UPDATE POSITION OF FLUID
PARTICLE BY TIME dt/2 BY
USING CURRENT VELOCITY — S182

CALCULATE FORCE APPLIED TO
FLUID PARTICLE
WITH PHYSICAL MODEL — S183

OBTAIN DATA OF SURFACE
PARTICLE WITH INTERFACE
EXTRACTION ALGORITHM — S184

FORM SURFACE ENERGY, AND
CALCULATE FORCE APPLIED TO
SURFACE PARTICLE WITH
DIFFERENTIATION — S185

FOR ALL BOUNDARY
PARTICLES

UPDATE VELOCITY OF FLUID
PARTICLE BY USING FORCE — S186

UPDATE POSITION OF FLUID
PARTICLE BY TIME dt/2 BY
USING UPDATE VELOCITY — S187

END

F I G. 1 8

F I G.　1 9

EP 2 602 731 A1

t = 0.250076

F I G. 2 0

F I G. 2 1

EP 2 602 731 A1

BUS

2201    2208

CPU

2205

EXTERNAL
STORAGE
DEVICE

2202

MEMORY

2206    2209

MEDIUM
DRIVING
DEVICE    ←    PORTABLE
RECORDING
MEDIUM

2203

INPUT
DEVICE

2207

NETWORK
CONNECTION
DEVICE    ←→    COMMUNICATION
NETWORK
2210

2204

OUTPUT
DEVICE

F I G.  2 2

Europäisches
Patentamt

European
Patent Office

Office européen
des brevets

## EUROPEAN SEARCH REPORT

**Application Number**

EP 12 19 4785

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG ET AL: "Simulation of surface tension in 2D and 3D with smoothed particle hydrodynamics method", JOURNAL OF COMPUTATIONAL PHYSICS, LONDON, GB, vol. 229, no. 19, 20 September 2010 (2010-09-20), pages 7238-7259, XP027184313, ISSN: 0021-9991 [retrieved on 2010-06-23] * the whole document, in particular section 2.1 2D Surface tension model * ----- | 1-5 | INV. G06F17/50 |
| A | SEIRO OMATA ET AL: "Variational approach to evolutionary free boundary problems", NONLINEAR ANALYSIS: THEORY, METHODS & APPLICATIONS, vol. 71, no. 12, 1 December 2009 (2009-12-01), pages e1547-e1552, XP055058720, ISSN: 0362-546X, DOI: 10.1016/j.na.2009.01.231 * the whole document, in particular first paragraph of section 4. Numerical results * ----- | 1-5 | |
| | | | **TECHNICAL FIELDS SEARCHED (IPC)** |
| | | | G06F |

The present search report has been drawn up for all claims

| Place of search | Date of completion of the search | Examiner |
|---|---|---|
| Munich | 8 April 2013 | Lerbinger, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008111675 A

**Non-patent literature cited in the description**

- **T. HONGO ; M. SHIGETA ; S. IZAWA ; Y. FUKUN-ISHI.** Modeling of Surface Tension Acting on Gas-Liquid Interface in Three-Dimensional Incompressible SPH Computation. *23rd Symposium of Computational Fluid Dynamics,* 2009, A8-5
- **M. AGAWA ; M. SHIGETA ; S. IZAWA ; Y. FUKU-NISHI.** Incompressible SPH Simulation of a Liquid Flowing down an Inclined Plane. *23rd Symposium of Computational Fluid Dynamics,* 2009, A9-4
- **K. NOMURA ; S. KOSHIZUKA ; Y. OKA ; H. OBA-TA.** Numerical analysis of Droplet Breakup Behavior using Particle Method. *Journal of Nuclear Science and Technology,* 2001, vol. 38 (12), 1057-1064